# EUROPEAN PATENT APPLICATION

(11) **EP 2 436 527 A2**
(43) Date of publication of application: **04.04.2012**
(21) Application number: 11004769.3
(22) Date of filing: 10.06.2011
(51) Int. Cl.: B41J 11/00, B41J 3/407

(54) **Machine and method for digital ink-jet glass printing with simultaneous drying**

(30) Priority: 14.06.2010 ES 201000798; 17.02.2011 ES 201130213
(71) Applicant: Tecglass SL, 36500 Pontevedra (ES)
(72) Inventor: Fernandez Vazquez, Juan Javier, 36500 Pontevedra (ES); Ramos Quiroga, Manuel, 36500 Pontevedra (ES)
(74) Representative: Álvarez Flores, Alberto

(57) **Abstract**

The present invention is related to a machine and a method which uses a head with performs simultaneous printing, drying and vitrification of the jetink deposited on a glass board. The machine and method utilize devices which are common in the market.

As an alternative, the drying can be performed by a laser device or an ultraviolet lamp.

The ink can be of ceramic or organic type.

Through an increase of the power of the drying device, it is possible to obtain a vitrification or semi-vitrification of the ink with high savings of space, energy, processing-time and devices.

## Description

### FIELD OF THE INVENTION

The present invention relates to a method and machine that uses a printing head flushing which performs simultaneously the steps of: digital printing, drying and vitrification of the ink over the glass, just using devices which currently exist in the in the market.

### BACKGROUND OF THE INVENTION

Several techniques of ink-printing on glass board are known.

The technique of Serigraphy, also known as silk-screening or screen-printing, is implemented by printing throughout a silk-screening where the desired pattern is previously designed in the screen. It is a very quick process of printing ideal for long and one-colour printing. The drawback is that this technique requires a screen-printing for each pattern and size of glass, more time for the adjustment of the printer in order to manage to make the glass coincide with the design of the screen, it only allows to print in one colour each time, as a result of which it is a very slow method and an expensive one for short series or personal patterns.

The technique of roller printing consists in the application of ink by means of rubber roller or metal roller with a dosage of the quantity of ink.

It is very quick for long and one-colour print runs. Without any difficulty it makes layers of up to 200 µm of ink, which allows giving much opacity to the applied layer. It realizes an application of ink on 100% of the surface of the glass with disregard to the size (with a limit of measures of the maximal format of each apparatus. As a drawback, this roller technique realizes paint only on 100% surface of glasses and without a pattern. It means it applies one colour on the whole piece of glass, it can only apply one colour each time, it has a high consumption of ink only for moistening the whole surface of the applying roller, and for changing colour and industrial process of cleaning is needed to eliminate the contamination of the previous colour.

Other techniques use an air gun, a manual or an automatic one, which consists in printing by means of ink spray device. It realizes application of ink on 100% of glass with disregard to the size (also inside the measures of the maximal format of the machine), it is a very quick method for long and one-colour print runs, and it realizes layers of up to 200µm of ink which also provides great opacity to the applied layer. As a drawback, it only realizes paint on the 100% surface of the glass and without a design. It means it applies colour on the whole piece of glass, it can only apply one colour each time and it requires a high consumption of ink.

The greatest part of the drawbacks of the printing techniques described previously is improved by the technique of digital printing. The digital printing allows a printing of personalized and multi-colour designs.

The actual procedure of digital printing on the surface of the glass comprises four large stages: the process of the image, digital printing, ink drying in the furnace, and final tempering for vitrifying the ink. That is why great surfaces of operation are required to arrange, among others, the procedure of ink drying.

Actually the ceramic and organic inks have to be applied on the surface of printing, glass in order to subsequently suffer a slow, delicate process with high consumption of power, a process that constitutes an additional procedure.

The actual procedures generally realize the deposit of printing ink by means of printing heads of a machine and the ink remains humid on the glass not incorporating simultaneous drying. In this way a mix of colours is produced in case the natural glass is not porous and the inks, humid after being applied, mix with each other creating effects in many occasions unsatisfactory and subject to improvement. Besides, these processes require a stage of subsequent drying which is realized in drying furnaces with a high consumption of energy of about 100 kW.

A step forward regarding the state of the technique of digital printing indicated in the previous paragraph represents the patent of ES2.338.332T3. This patent describes a machine and procedure of ceramic ink printing on a surface of glass where the ink suffers, using the terminology of the given patent, a "primary ink fixation" in a simultaneous form with the printing. No doubt, the above-mentioned "primary ink fixation" is not the final or complete drying of the ink, still requiring the use of furnace of final drying. That is why this patent, as indicated in its description: "allows for safely handling an outputted glass board from the printer to firing at a high temperature furnace".

On the other hand, the traditional machines for ink printing on glass have specific special heads which use ink that only supplies the manufacturer of the machine or its authorized suppliers. For example, again, the patent ES2.338.332T3 has an object, precisely, an machine characterized by a supply of specific ink and in its description a reference is made to the use of: "Such new and innovative ink for inkjet digital glass printing which is a subject to a patent application by itself, requires however special ink system that will have the abilities to comply with its unique heterogenic suspension format". The necessity to use a specific ink provides less flexibility to the final user of the machine and raises the cost of operation, maintenance and future adaptability.

Another additional limitation of digital printing machine- the object of patent ES2.338.332T3 is represented by the fact that the fastening bridge of the printing head moves in the longitudinal (X) and transversal (Y) directions on the glass, which confines the final user to decide during buying the equipment the measures of desired printing which will be fixed and immovable during the life of the equipment.

Some documents of the patent which describe diverse techniques of printing on glass or the surfaces that present some of the peculiarities of glass are described in the following paragraphs:

The document of the patent JP63087278A, of an alternative form, details a process with which a layer of printing is obtained which favours the reception of the ink on a non-absorbent or little-absorbent surface like the glass. To get that, the following multiple process has to be carried out: first stage of surface drying to print by means of ultraviolet ray, and after that takes place the stage of drying of the previous layer by a thermal reaction, oxidation or a reaction caused by humidity.

It is known the patent document ES2336989 A1, in which a long procedure of ultraviolet digital printing on glass or crystal is described, which consists of the following phases: apply water glaze consisting of acrylic resins on the sheet of colourless glass to print being able to make this application by a pistol or by immersion. After that the water of natural form evaporates at a room temperature or in a furnace at 50° from 5 to 10 minutes. In a third phase glass in the ultraviolet printing plotter is introduced and the printing of the same is preceded after which it is left to rest for 24 hours for curing the ultraviolet ink. Subsequently a compound water glaze is applied manually, with a roller machine, on the base of acrylic resins again and then comes the evaporation of water in the equal conditions as in the second phase. Then you can choose to let the glass recover by itself at a room temperature during 96 hours or submit the glass to final recovery in a furnace at 150° C for about 30 minutes.

In a neighbouring field of technique, the invention reflected in the document WO2010084272 refers to a method of printing on ophthalmologic crystals. The method consists in the formation of a base depositing the first photo-polimerizable ink on the surface of the glass after which the polymerization of the same is realized by means of radiation by ultraviolet source and after that a new printing of transparent ink is done. In this way a minimal risk of geometrical distortion or breakage of elements of printing is managed.

In the document DE 3743257 A is observed a process of printing with multiple stages for the decoration of materials that will have silicates, like the glass or the porcelain, in which primarily a impregnated of a pigment with ceramic contents is produced, and then the drying of the same. After this pre-treatment one or various printings are realized using pigments, metal elements or precious metals and utilizing thermoplastic processes or non-dry processes. After these printings a uniting agent is applied on the article which is hardened by ultraviolet radiation and which provides necessary stability to the printing for its subsequent final drying.

The document DE 102005043117 A1 details a printing on glass on which a thin layer of paint of thermostable serigraphy mixed with an adhesive agent and a solvent is applied. On this layer base a process *wet-on-wet* is realized and subsequently the hardening of this layer base is realized using ultraviolet radiation.

Again in the neighbouring field of technique, the document WO 2006027212 A1 describes a decoration tier of glazed tile where two processes differ, the first one- printing of glazed tiles in a digital machine and one- after printing by rotary press on the substrate already printed digitally.

The document US 7727634 A contemplates the decorative printing on laminated crystal which is produced with a first partial treatment with an ultraviolet lamp and a subsequent, for that reason not a simultaneous, complete treatment with an exposure to a second ultraviolet lamp of maximal intensity.

That is why, on the view of the documents of the patent described above, the existence of procedures which count with the ink drying by ultraviolet radiation, infrared and/or radiation laser, everything applied in different procedures or stages of printing is known.

The major problem of usage of these inks on glass is the adherence to the substrate to print with respect to its low porosity, and that is why some inventions consist in special inks.

### SUMMARY OF THE INVENTION

The machine and the procedure, object of the present invention, exceeds the actual drawbacks, described previously, of the machines and procedures of digital printing on glass with ceramic and organic inks realizing the drying of the ink on a simultaneous form to its printing by means of an emitting device of radiation as a laser, one infrared lamp or one ultraviolet emission lamp incorporated in the carrier of transportation of the printing head.

With the machine and the procedure object of the present invention it is managed to considerably increase the capacity of printing with different colours without emergence of problems of undesired mix of colours. The simultaneous process of drying and printing the capacity of a design increases allowing to combine colours in very definite lines, which, on the contrary, in a conventional system, with the presence of humid ink, would mix on the edges and the line would not have the same definition.

In particular, the machine- object of the present invention, incorporates printing heads, a system of ink supply, some printing inks adequate for this type of industry, a laser system and/or, infrared lamp for the drying of the ink applied on the surface of the glass, a series of common components in machines, like motors, electronics, electricity and pneumatic devices known in the state of the art.

Laboratory tests with different potentials of drying, at different speeds of passage of printed glass to drying and with different types of inks have been carried out It is observed that even at low powers of laser of 300 W, and starting from the power of ultraviolet lamp of 180 W, an adequate drying of the ink can be managed.

For that reason the present invention allows an operation with a drastic reduction of: energy consumption, physical space, maintenance expenses, and waste of time for the process. All that with the use of a machine incorporates advantageously constituent devices and ink that are common in the market.

The procedure described until now allows limiting the procedure of application of ink on glass to three steps: process of image, the only stage of digital printing and drying by means of laser and/or simultaneous infrared lamp and the final heating of glass with nitrification of the applied ink. In that way the stage of ink drying, existing in the state of the actual technology is eliminated. Besides, it does not require the use of the final furnace of drying on the contrary to, for example, the patent ES2.338.332T3 described previously.

The costs of manufacturing and installation of the components of the present invention described above can go down even more by means of using the ultraviolet radiation lamp as a device of final drying of ceramic or organic ink. Vitrification of ink is not realized by the use of ultraviolet radiation, that is why its use is ideal for those applications, when it is possible to renounce vitrification. In any case, the use of ultraviolet radiation definitely dries the printed ink without a necessity for installation, and the high consumption (in terms of finance and time) of drying furnace. Besides, in this way it is possible to reduce even more the necessary space and in an equal way the resolution of printing increases.

In this way the machine and the procedure with ultraviolet radiation become an intermediate solution between the drying by a laser described above and the state of the previous technology what refers to drying of the applied ink and maintaining numerous advantages of drying by laser, which consists in a cheaper alternative.

The drying by ultraviolet radiation consists in the passage of glazed inks and/or from liquid state to a solid one, in an instantaneous way, while polymerization by effect of incidence is of ultraviolet radiation in a longitude of specific wave, normally situated between 200 and 400 nm. The polymerization is a chemical reaction by which the molecules of a substance with a little molecular weight called monomers) unite among each other forming linear macromolecules of a solid state, called polymer.

In this way, the composition of inks and ultraviolet glazes is different from that of the conventional inks and glazes. They basically differ in the fact that the conventional inks are typically composed of resins, pigments, additives and solvents, while in the case of UV inks, the components are: resins, pigments, additives and monomers. An example of a typical composition of a UV ink, and with which the test has been made is the following: 20% of pigment, 40% of prepolymers, 25% of monomers and oligomers, 10% of photoinitiator and 5% of additives.

The agents of ultraviolet inks and glazes responsible for the reaction of polymerization are the monomers, the oligomers and the photoinitiators. In the reaction, by the effect of ultraviolet radiation, the photoinitiator detaches free radicals (energy) which are the ones that provoke the start of the reaction in the chain of polymerization, producing a total instantaneous drying. Since the drying in this reaction is based on chain of molecules interwining, it does not exist neither evaporation of solvents, or significant heating of the support.

For that reason, the alternative process by means of using ultraviolet radiation allows to limit the procedure of application of ink on the glass by two steps: process of image and an only stage of digital printing and drying by means of ultraviolet radiation. In this way, the independent stage of ink drying, existing in the state of the art, is eliminated.

Considering the printing machine on glass, object of the present invention, it utilizes both organic and ceramic inks.

In the case of ceramic inks, it refers to glazings or frits, composed of silica and flux mixed with colours obtained from metal oxides. In the case of the present invention there are two possibilities: the flux may get mixed with the colour, in case of which each colour in each head incorporates the flux, or the flux is applied independently in a head and each colour in each head carries only the colours obtained from metal oxides. In each case, the ink incorporates additives to ensure the applicability.

Allowing the user of the machine to use supplies of ink for any manufacturer of ceramic inks, the user will have the advantage of having several options with different providers of ink.

The machine, object of the present invention, can print both with ceramic and organic inks without a necessity to have two machines- one for each type of ink.

In particular, the machine, object of the present invention, incorporates printing heads, a system of ink supply, printing inks like, for example, the ones indicated above, an infrared, laser or ultraviolet radiation lamp, for the drying of the ink applied on the surface of the glass, and a series of components common for machines (motors, electronics, electricity and pneumatic, etc. known in the state of the technology.

For that reason, the utilization of drying devices by means of ultraviolet radiation, like the one of the present invention, are cheaper than the ones used by the existing machines or in the machine, object of the present invention, when the latter utilizes infrared or laser radiations.

Utilizing commercial ink heads which also use inks of commercial printing, the costs of maintenance and operation of the machine decrease, providing high flexibility in the supply of key components, and a cost saving.

As the printing head and the radiation lamp (laser, ultraviolet or infrared) are situated together in a printing carrier of the machine, the following is managed: the emission radiation lamp covers and dries the whole width of the glass surface. In this way, the heads deposit the ink and, immediately and in a simultaneous way, the radiation emission dries the deposited ink.

An additional configuration of the present invention is managed by means of a reinforcement of the power of the laser device and/or an infrared lamp incorporated in the transportation carrier of the printing head described above, by more than 1,6 kW. The inventor has verified in different tests that a complete glazing can be managed or, alternatively, a semi-glazing of the simultaneously applied ink. For certain finishes, in certain products, it is sufficient with a semi-glazing. In this way, in this last configuration, the heads deposit the ink, and immediately and in a simultaneous form, the beam laser and/or the infrared lamp dries and vitrifies the deposited ink. In this way is managed a drastic additional reduction of: power consumption, physical space, managing to eliminate the necessary space for the heating furnace, and time waste on the process. Besides, it is possible to limit the procedure of application of ink on glass to two steps. Besides, it is possible to limit the procedure of application of ink on glass to two steps: process of image, and a single stage of digital printing and simultaneous drying-glazing by means of laser and/or infrared lamp. In this way the independent stage of ink drying existing in the traditional technology and the stage independent heating of ink glazing are eliminated.

For that reason, the machine, object of the present invention, utilizes the laser so that it is able to concentrate the energy in a concrete point and not radiate energy on the whole longitude of the bridge, which will allow avoiding: considerable expenses of energy, radiate heat and sensible elements and a very weak fixation of the ink. As it has been mentioned above, the drying laser with a major power applied can vitrify the ink over the glass fusing the nanoparticles of glass that the ink contains and fixing the pigments to glass with them. With this it would even be possible to eliminate the process of heating for concrete processes and applications.

The machine of digital printing of both ceramic and organic inks, object of the present invention, allows a displacement of glass in the longitudinal direction "X" by means of vacuum carriers (for example, incorporating a group of suckers). In this way the final user has a limitation only in the axis "Y", but never in axis "X", as the machine could print an infinite glass in the direction "X. This gives more versatility and fewer restrictions to the final user.

For that reason, the machine, object of the present invention: realizes the printing by splash of ink over glass with "X" movement of the glass by means of transportation system, and which with a certain configuration of heads can print with ceramic and organic inks; besides, it has a system of drying simultaneous to the printing enclosed by printing bridge or by laser or UV; it can use the system of drying for vitrification; it can get on without printing heads and realize the drying of any printing over glass with any printing mode; and if it gets on without printing heads, it can take out and vitrify any printing over glass with any mode of printing.

For that reason, the present invention provides a wide range of solutions to the consumers and manufacturers.

### BRIEF DESCRIPTION OF THE FIGURES

The following figures are included with the aim of facilitating the comprehension of the invention:
- Figure 1: upper view of the distribution of the machinery *(lay-out)* to use and a flow of work of the known actual procedure in the state of technology of ink printing over glass.
- Figure 2: the upper view of the distribution of the machinery *(lay-out)* to use and the flow of work of the procedure, object of the first and second alternative of the present invention for ink printing over glass.

- Figures 3-A, 3-B and 3-C respectively: views on the perspective of the ink printing machine, object of the first alternative of the present invention, the lower view of the printing heads with the drying laser, and view by perspective of detail of the head of application of extracted ink.
- Figures 4-A, 4-B and 4-C respectively: views on the perspective of ink printing machine, object of the second alternative of the present invention, lower view of the printing heads together with the ultraviolet drying lamp and the diagram of the ultraviolet lamp.
- Figure 5: upper view of distribution of the machinery *(lay-out)* to use and flow of work of the procedure, object of the third alternative of the present invention, for printing ink over the glass.
- Figures 6-A, 6-B and 6-C respectively: views on the prospective of the ink printing machine, object of the third alternative of the present invention, lower view of printing heads together with the drying laser and simultaneous vitrification, and view on the perspective of the detail of one head of application f extracted ink.
- Figure 7: view on the perspective from the side of the ink printing machine with the supporting bridge of the carrier which incorporates the head of drying and the directions of displacement of the mentioned carrier and of displacement of the glass on which the ink is deposited.
- Figure 8-A and 8-B: photos, respectively, of an upper perpendicular view and an upper oblique view of drying test results in the laboratory.

### DETAILED DESCRIPCION OF THE FIGURES

Below, the functioning of the preferred realization of the invention is detailed which should be understood in a wide and not limited sense.

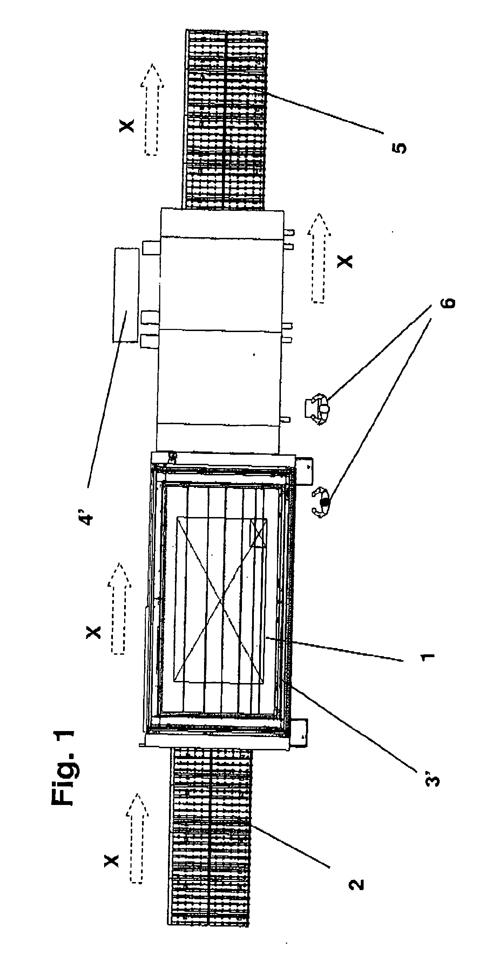

In the figure 1 is observed the upper view of distribution of the machinery *(lay-out)* to use and flow of work of the actual procedure known in the state of technology, of ink printing over glass. After a first stage of treatment of the image the glass (1) is deposited in a load table (2) which incorporates a structure of transport which allows the displacement of glass (1) in the direction "X" to a zone of digital printing where the machine of digital printing is situated (3'), to subsequently pass to a drying stage by means of a drying furnace (4'). Finally, the glass continues its displacement "X" until an unloading table (5). To give an idea of the volume engaged with this machinery, two workers have been represented (6).

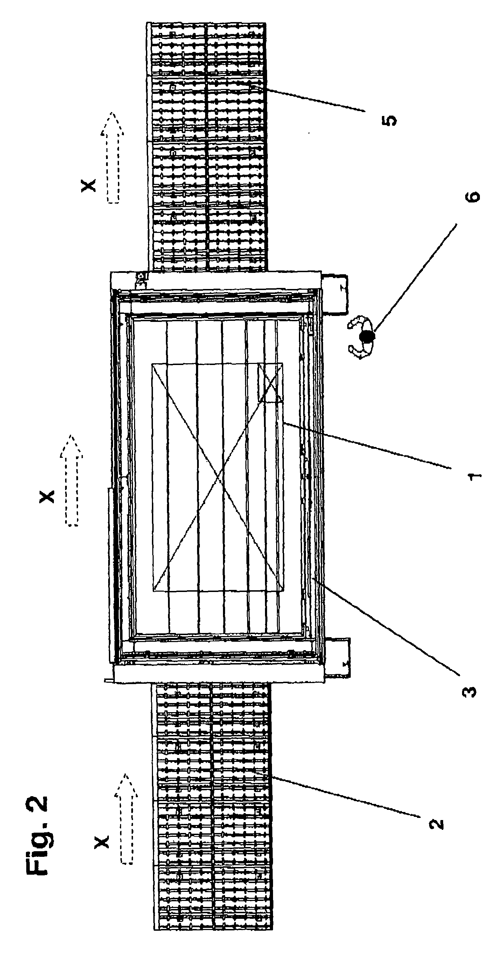

In the Figure 2 the upper view of distribution of the machinery *(lay-out)* is represented to use, and the flow of work of procedure, object of the first and second alternative of the present invention for ink printing over glass. The same as the previous figure 1, a load table exists (2) a printing zone which incorporates a machine of printing-drying of ink, object of the present invention (3) and an unloading table (5). For that reason, in figure 2 the elimination of the stage of independent drying of ink is observed by means of the furnace of drying 4' (see figure 1.

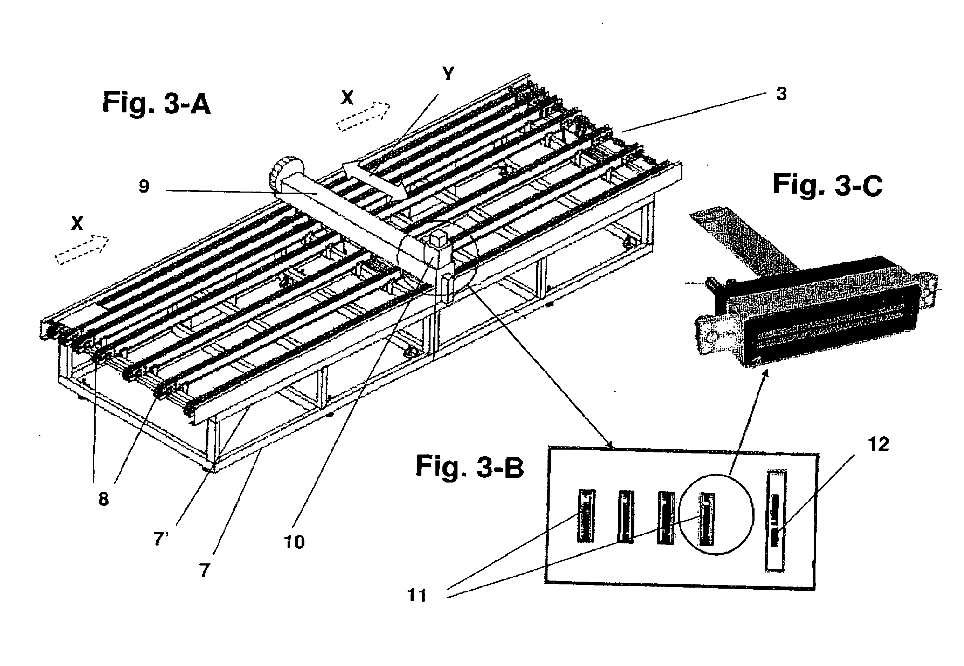

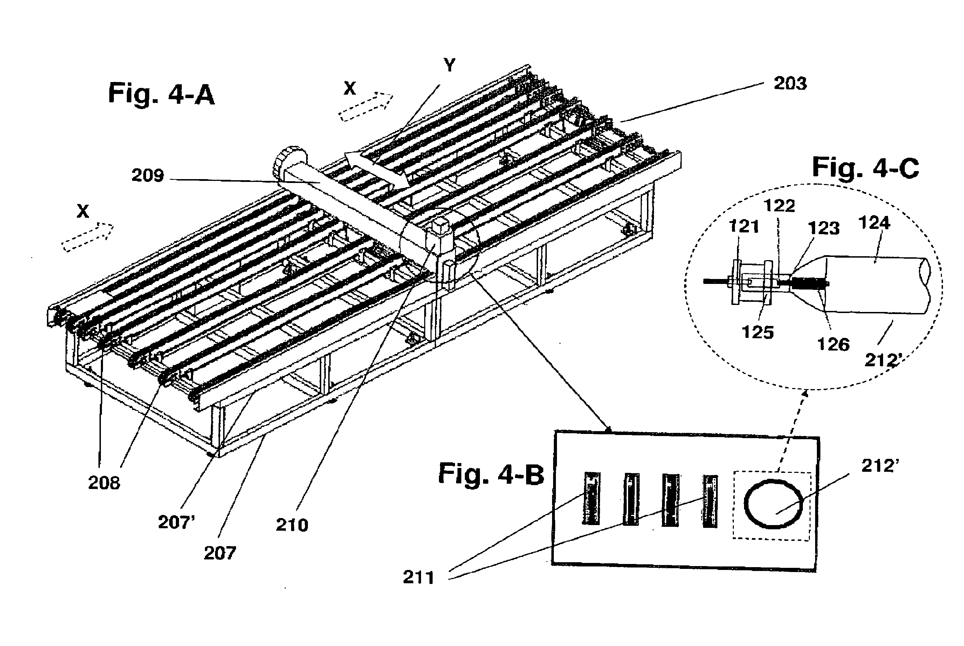

In the figure 3-A the ink printing-drying machine (3), object of a first alternative of the present invention, is represented. This machine is composed of two rectangular structures (7,7') adequate to the maximal format of a glass to be printed (for example 6000 mm x 3210 mm) on which a series of vacuum belts (8) are displaced, which transport the glass (not represented in figure 4, see figure 2) in the axis "X" (for example 6000 mm). Among these two structures the bridge (9) is situated on which the printing carrier is displaced in the direction "Y", transversal in advance from the glass (1). In the carrier the printing heads (11) are set up, and the laser of drying that applies power of 1,2 kW. In this way a printing carrier (10) is managed which is displaced in Y transporting the printing heads (11) and the bundle laser of drying (12) and some belts (8) which displace the glass in the direction "X". Alternatively, the machine (3) can incorporate structures of transportation of glass (1) like the ones described in the request of Spanish patent P201001404.

In the figures 3-B and 3-C there are presented simultaneously: the lower view of the printing heads (11) together with the laser of drying (12), and the view in the perspective of detail of a head for application of extracted ink (11).

All the components of the machine (3) are commercial and are not designed exclusively for this machine (3). For example, a favourite realization incorporates printing heads Xaar ® model 1001.

In the figure 4-A the ink printing-drying machine (3), object of a second alternative of the present invention, is represented. This machine is composed of two rectangular structures (207,207') adequate for the maximum format of glass to print (for example 6.000 mm x 3.210 mm) on which a series of vacuum belts are displaced (208), which transport the glass (see figure 2) in the axis "X" (for example 6000 mm). Between those two structures the bridge is situated (209) on which the printing carrier is displaced in the direction "Y", transversal in advance from the glass (201). The printing heads (211) and the ultraviolet radiation lamp of drying are set up in the carrier. In this way a printing carrier (210) is managed which is displaced in the direction "Y" transporting the printing heads (211) and the ultraviolet radiation of drying (212). Some belts displace the glass in the direction "X", while, alternatively, the machine (203) can incorporate structures of transportation of glass (201) like those described request of Spanish patent P201001404.

In the figure 4-B the lower view of printing heads (211) together with the ultraviolet lamp of drying (212) is represented. In the figure 4-C a typical diagram of ultraviolet lamp (212) with its principal components is represented: cable covered with PTFE (221), molybdenum plate (222), tungsten plug (223), silicon crystal (224), final ceramic or metallic adjustment (225) and tungsten reel (226).

The drying furnace of the figure 1 usually needs that the transportation belts are displaced at a velocity of 2 m/min. and with a medium consumption of 120 kW.

The procedure, object of the first alternative of the present invention (see figure 2) requires load and supply of glass to a zone of printing where printing and drying are produced by means of applied ink laser of simultaneous form. Subsequently, the printed glass, with the ink already dry, doesn't require a drying of ink applied by means of a drying furnace (4') (see figure 1), passing to the zone of unloading of the same for subsequent treatments (not represented) of final heating for the vitrification of the ink (procedures of lamination, curved and/or rapid cooling of the cold by means of cold fluid, for example).

The procedure, object of the second alternative (see figure 2) of the present invention requires the load and supply of glass in the direction of a zone of printing where printing and drying by means of ultraviolet radiation of the applied ink in a simultaneous form is produced. Subsequently, the printed glass, with the already dry ink, doesn't require (4') (see figure 1) a drying of ink applied by means of drying furnace, passing the printed glass to the zone of unloading of the same for subsequent treatments and manipulations which will be needed.

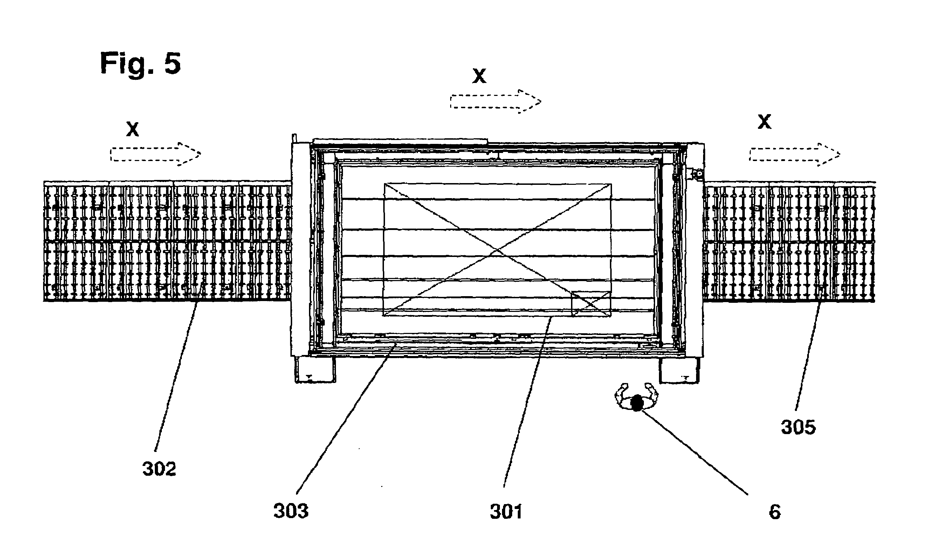

In figure 5 the upper view of the distribution of the machinery *(lay-out)* to use and flow of work of the procedure, object of a third alternative of the present invention, for ink printing over glass is represented. Equal to figure 2 exists a load table (2) a printing zone which incorporates a machine, no doubt, of printing-drying-vitrification of ink, also object of the present invention (303) and an unloading table (305). For that reason, in figure 5 the elimination of the stage of independent ink drying by means of a drying furnace (4') (see figure 1) and saving of space of independent heating (120) (see figures 1 and 2) is observed. The saving of space due to the elimination of drying furnace and the vitrification furnace can be about more than 10 metres.

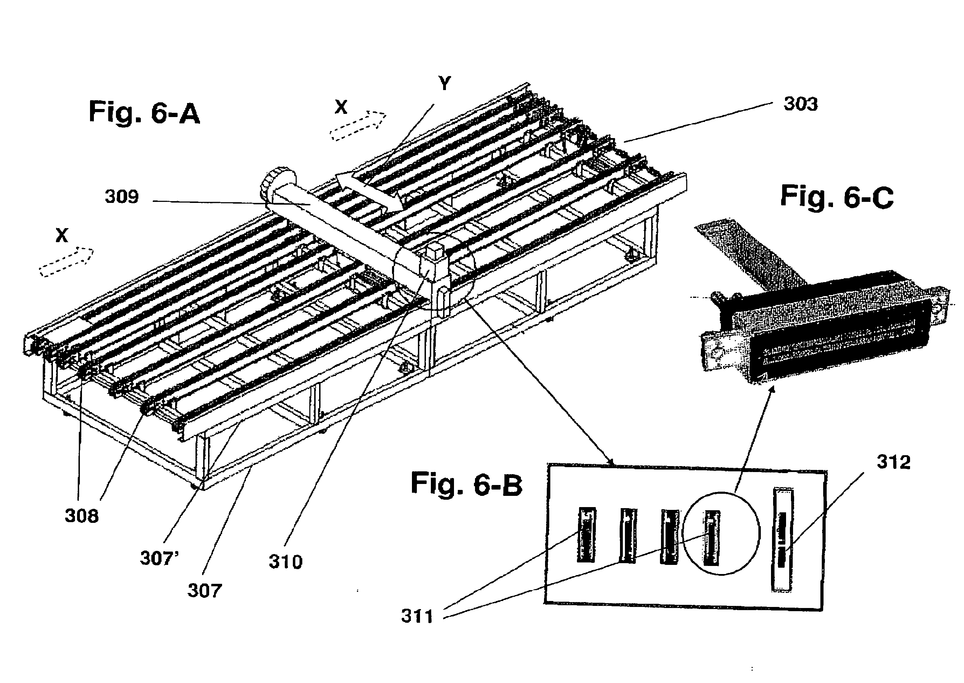

In the figure 6-A a third alternative of a machine of ink printing-drying (303), object of the present invention, is represented. This machine is composed of 2 rectangular structures (307,307') adequate to the maximum format of glass for printing (for example 6000 mm x 3210 mm) on which a series of vaccum belts (308) are displaced which transport the glass (see figure 2) to the axis "X" (for example 600mm) . Between these two structures the bridge (309) is situated on which the printing carrier is displaced in the direction "Y", transversal in the advance of glass (301). Printing heads (311) and the laser (312) of drying and vitrification with a power of between 1,6 kW and 2 kW are set up. In this way a printing carrier (310) is managed which is displaced in "Y" transporting the printing heads (311) and the bundle laser of drying and vitrification (312) and belts (308) which displace the glass in the direction "X".

In the figures 6-B and 6-C the lower view of the printing heads (311) together with the laser of simultaneous drying and vitrification (312), and the view in the perspective of detail of the application head of extracted ink are represented simultaneously.

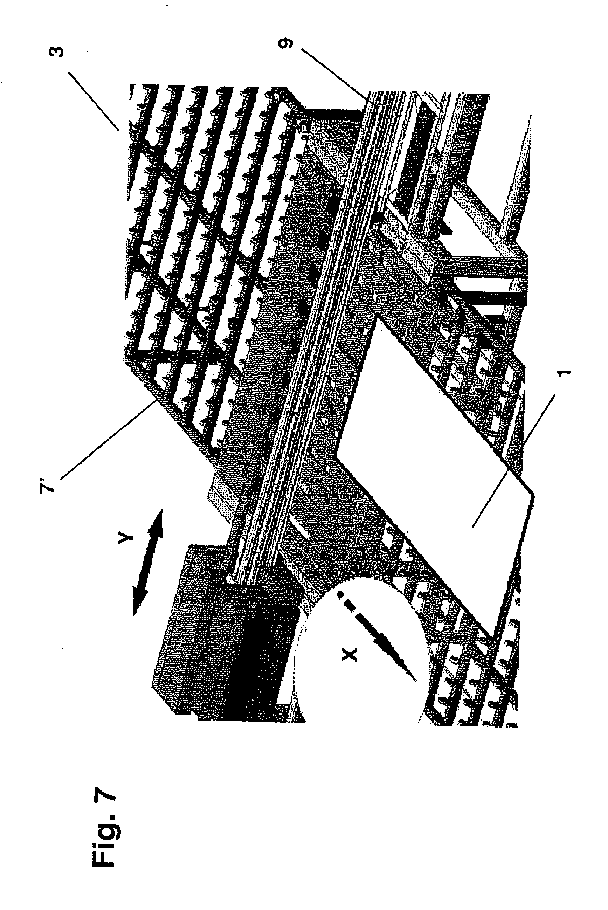

In the figure 7 a perspective from the part of the ink printing machine (3) with the supporting bridge (9) of the carrier is observed, which incorporates the head of ink-drying and the directions of the displacement "Y" of the mentioned carrier and of the displacement "X" of the glass (1) on which the ink is deposited.

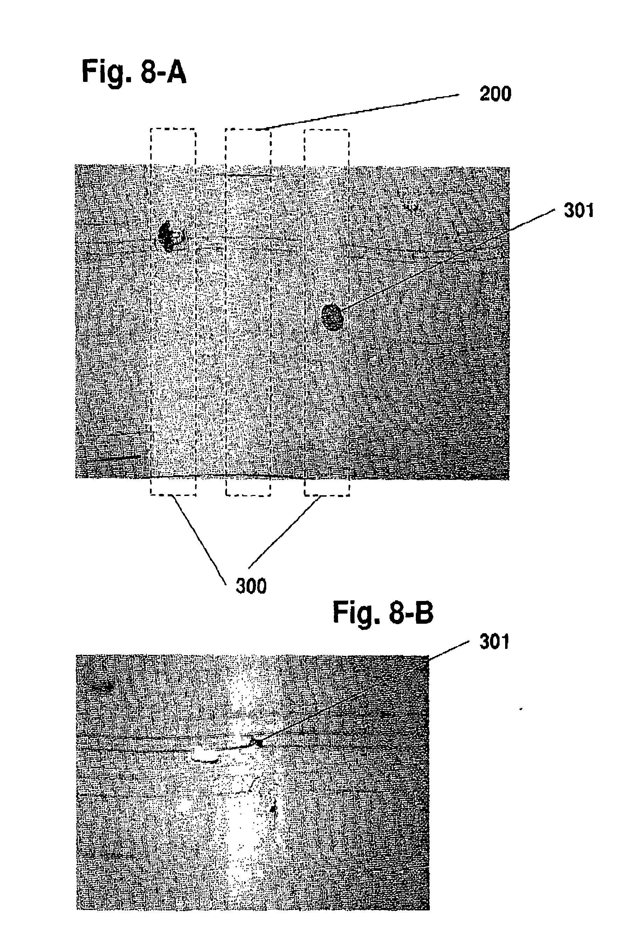

In the figures 8-A and 8-B the photos of the results of tests of drying in the laboratory are shown. Effectively, one of the tests realized in the laboratory as it is explained in the continuation.

Different tests of drying of an ink head applied over a glass have been carried out for determining the following parameters of field (see figures 8-A and 8-B): velocity of passage of the ray of laser over the material for a band of given ink; the intensity of the laser of drying; and the dimension of the (*spot*) of the incidence of the laser ray.

The laboratory tests allow finding a stable interval of the parameters of the field where the ink can be dried without destroying the head of the applied ink. This interval is sufficiently wide for being able to implement this method in a machine of industrial use for the ink drying.

In the following table the mentioned parameters of field for a type of ink named type 1 are shown:

| Reference in figures 8-A and 8-B | Power of the laser | Passage Speed of the glass | With of ink stripe | Result |
|---|---|---|---|---|
| | 0 , 3 kW | 5 m/s | 5 mm | The ink is not totally dry |
| 200 | 0 , 3 kW | 2 m/s | 5 mm | The ink is dry and in good conditions |
| 300, 301 | 0 , 3 kW | 0, 5 m/s | 5 mm | The ink is dry but cracks have been produced (301) |

## Claims

1. An apparatus (3,203,303) for digital printing on glass (1,201,301) of the kind that comprises at least a printing head (11,211,311) mounted on a printing carrier (10,210,310) **characterized in that** said printing carrier (10,210,310) integrates, together with said printing head (11,211,311), a radiation emitting device for ink drying (12,212,312) .

2. An apparatus (3,203,303) for digital printing on glass (1,201,301), according to claim 1, **characterized in that** said emitting device for ink drying (12,212,312) emits with a power of at least 180 W.

3. An apparatus (303) for digital printing on glass (301), according to any of the preceding claims, **characterized in that** said emitting device for ink drying (312) becomes additionally and simultaneously a vitrification device by emitting with a power between 1,6 kW and 2 kW.

4. An apparatus (303) for digital printing on glass (301), according to any of claims 1 or 2, **characterized in that** said emitting device for ink drying (312) becomes additionally and simultaneously a semi-vitrification device by emitting with a power of 1,4 kW.

5. An apparatus (3,303) for digital printing on glass (1,301), according to any of the preceding claims, **characterized in that** said emitting device is a laser (12, 312).

6. An apparatus (3,303) for digital printing on glass (1,301), according to any of the preceding claims, **characterized in that** said emitting device (312) is a laser (12, 312) with a power of at least 300 W.

7. An apparatus (3,303) for digital printing on glass (1,301), according to any of claims 1 to 6, **characterized in that** said emitting device is an infrared lamp.

8. An apparatus (203) for digital printing on glass (201), according to any of claims 1 or 2, **characterized in that** said emitting device for ink drying is an ultraviolet emitting device and acts as a final drying device.

9. An apparatus (3,203,303), according to any of the preceding claims, **characterized in that** said printing carrier (10,210,310) is movable along a bridge (9,209,309), said bridge located over the glass (1,201,301) feeding direction ("X").

10. An apparatus (3,203,303), according to any of the preceding claims, **characterized in that** said printing carrier (10,210,310) is movable perpendicularly ("Y") to the feeding direction ("X") of the glass (1,201,301) to be printed.

11. An apparatus (3,203,303), according to any of the preceding claims, **characterized in that** said apparatus (3,203,303) further comprises a glass (1,201,301) transportation structure (7,7',207,207',307,307') via vacuum belts (8,208,308).

12. An apparatus (3,203,303), according to any of the preceding claims, **characterized in that** said ink is of ceramic type.

13. An apparatus (3,203,303), according to any of the preceding claims, **characterized in that** said ink is of organic type.

14. A method of digital printing on glass, **characterized in that** said method comprises a step of simultaneous digital ink-jet printing and ink drying by emitting a drying radiation.

15. A method of digital printing on glass, according to the preceding claim, **characterized in that** said method comprises a step of simultaneous digital inkjet printing and ink drying by emitting a drying radiation with a power of at least 180 W.

16. A method of digital printing on glass, according to the any claim 14 or 15, **characterized in that** said drying radiation is simultaneously a vitrification radiation of the ink.

17. A method of digital printing on glass, according to the any claim 14 or 15, **characterized in that** said drying radiation is simultaneously a semi-vitrification radiation of the ink.

18. A method of digital printing on glass, according to the any claim 14 or 15, **characterized in that** said method further comprises: a step of image processing, a step of glass loading and feeding toward the digital printing area with simultaneous ink drying, and a step of final tempering for ink vitrification.

19. A method of digital printing on glass, according to the any claim 14 or 15, **characterized in that** said method further comprises: a step of image processing, a step of glass loading and feeding toward the digital printing area with simultaneous final ink drying by emitting ultraviolet radiation.

20. A method of digital printing on glass, according to the any claim 14 or 15, **characterized in that** said method further comprises: a step of image processing, a step of glass loading and feeding toward the digital printing area with simultaneous ink drying and ink vitrification.

21. A method of digital printing on glass (1), according to the any claim 14, 15 or 18, **characterized in that** said step of digital printing with simultaneous ink drying by emitting radiation is implemented by the apparatus claimed in any of claims 1, 2, 5, 6, 9, 10, 12 or 13.

22. A method of digital printing on glass (301), according to the any claim 14, 15, 16, 17 or 20, **characterized in that** said step of digital printing with simultaneous ink drying and ink vitrification by emitting radiation is implemented by the apparatus claimed in any of claims 1, 2, 3, 4, 9, 10, 11, 12 or 13.

23. A method of digital printing on glass (201), according to the any claim 14, 15 or 19, **characterized in that** said step of digital printing with simultaneous final ink drying by emitting ultraviolet radiation is implemented by the apparatus claimed in any of claims 1, 2, 8, 9, 10, 11, 12 and 13.

24. A method of ink drying of any digital printing on glass, **characterized in that** said method is implemented by the apparatus claimed in any of claims 1 to 13 without installing said printing heads

25. A method of ink drying and vitrification of any digital printing on glass, **characterized in that** said method is implemented by the apparatus claimed in any of claims 1 to 13 without installing said printing heads.
